# FASCICULE DE BREVET EUROPEEN

(11) **EP 1 011 918 B1**
(45) Date de publication et mention de la délivrance du brevet: **13.02.2002**
(21) Numéro de dépôt: 98936468.2
(22) Date de dépôt: 07.07.1998
(51) Int. Cl.: B23Q 39/02

(54) **ENSEMBLE DE MACHINES-OUTILS DESTINE A USINER SENSIBLEMENT SIMULTANEMENT UNE T LE**
WERKZEUGMASCHINENEINHEIT ZUM IM WESENTLICH SIMULTANEN BEARBEITEN EINES BLECHES
MACHINE-TOOL ASSEMBLY FOR SUBSTANTIALLY SIMULTANEOUS MACHINING OF A SHEET METAL

(30) Priorité: 07.07.1997 FR 9708817
(43) Date de publication de la demande: 28.06.2000
(73) Titulaire: Jeandeaud, Jean-Claude, 38080 Saint Marcel Bel Accueil (FR)
(72) Inventeur: Jeandeaud, Jean-Claude, 38080 Saint Marcel Bel Accueil (FR)
(74) Mandataire: Maureau, Philippe
(86) Numéro de dépôt international: FR9801461
(87) Numéro de publication internationale: WO9902301

(56) Documents cités:
- EP-A- 0 634 237
- DE-A- 4 113 629
- DE-A- 4 328 801
- GB-A- 2 262 461

## Description

La présente invention concerne un ensemble de machines-outils, telles par exemple des poinçonneuses, destinées à usiner sensiblement simultanément une même tôle.

Il est connu, pour réaliser des gains de temps, de placer plusieurs machines-outils identiques, ou différentes, les unes à côté des autres et/ou les unes en face des autres. Ainsi, lorsqu'une tôle est apportée à cet ensemble de machines, la tôle a très peu de déplacement à effectuer pour être usinée par chacune de ces machines l'une après l'autre. Deux machines se trouvant en vis à vis usinent souvent simultanément la tôle, mais sauf dans le cas de configurations bien particulières, toutes les machines ne travaillent pas simultanément.

On retrouve de tels ensembles de machines notamment dans le travail de tôles, par exemple pour poinçonner des tôles.

Pour augmenter la rapidité d'exécution de cet ensemble de machines, il est connu de rendre les diverses machines composant cet ensemble mobile selon une direction (voir par exemple FR-A-2 750 627). Il s'agit, dans les machines de l'art antérieur connu, d'une direction perpendiculaire à la direction de convoyage des tôles à usiner. Ainsi, quand des machines mobiles se trouvent sur deux rangées se faisant face, elles se déplacent de telle sorte qu'elles s'approchent ou s'éloignent des machines leur faisant face.

Ainsi, le processus d'usinage peut être très sensiblement accéléré.

Le document DE-41 13 629 décrit un ensemble de machines alignées destinées à percer et fraiser automatiquement, de tous côtés, une pièce à usiner allongée. A cet effet, les diverses machines sont déplaçables et positionnables par un système de vis sans fin motorisé le long d'une broche montée sur un bâti.

L'invention a alors pour but de fournir un ensemble de machines-outils qui permet d'augmenter encore le gain de temps par rapport aux ensembles de machines-outils connus.

À cet effet, l'ensemble de machines-outils qu'elle propose comporte de façon connue au moins deux machines-outils pour l'usinage de la tôle, l'une au moins de ces machines-outils étant munie de moyens la rendant déplaçable selon une première direction, ainsi que des moyens permettant l'amenée et le convoyage d'une tôle.

Selon l'invention, l'une au moins des machines-outils déplaçable selon une première direction est disposée sur un chariot ou similaire, et des moyens sont prévus pour déplacer chaque chariot selon une seconde direction.

De cette manière, au moins une machine-outil est déplaçable selon les deux directions de déplacement prévues sur la machine. Il est alors possible de positionner cette machine outil au nombre d'au moins une par rapport à la tôle à usiner. Ce positionnement peut s'effectuer pendant le temps d'acheminement d'une nouvelle tôle à usiner vers l'ensemble de machines-outils. Cette opération s'effectue ainsi en temps masqué, alors que dans un ensemble de machines-outils de l'art antérieur, il est la plupart du temps nécessaire de déplacer la tôle à usiner durant son usinage pour que la tôle soit bien positionnée lors de son usinage par les diverses machines constituant l'ensemble.

Étant donné que dans la pratique les plans d'usinage sont presque toujours réalisés en utilisant un repère orthogonal, les première et seconde directions sont avantageusement perpendiculaires.

Dans une première forme de réalisation, les moyens permettant le déplacement d'une machine-outil selon une direction comportent une crémaillère parallèle à cette direction et déplaçable longitudinalement à l'aide d'un moteur ainsi qu'un pignon muni d'un dispositif d'embrayage, le pignon étant destiné à venir engrener avec la crémaillère.

Ces moyens peuvent servir à déplacer la ou les machine(s)-outil(s) dans une direction ou bien dans les deux directions.

Les moyens permettant le déplacement d'une machine-outil selon une direction peuvent aussi comporter par exemple un arbre perpendiculaire à cette direction, entraîné en rotation par un moteur ainsi qu'une poulie montée de façon débrayable sur l'arbre, la poulie étant associée à une seconde poulie par l'intermédiaire d'une courroie sur laquelle est monté un chariot portant la machine-outil correspondante.

Bien entendu, d'autres moyens sont envisageables pour déplacer les machines-outils. Un moteur linéaire pourrait par exemple être utilisé.

Selon une forme de réalisation, l'ensemble selon l'invention comporte deux rangées parallèles de machines-outils se faisant face. Cette disposition est souvent réalisée, car elle convient très bien pour usiner des tôles qui sont symétriques ou bien quasi symétriques.

Dans cette configuration, chaque rangée de machines-outils est avantageusement montée sur un bâti. Une crémaillère mobile longitudinalement est alors avantageusement montée sur le bâti sur sensiblement toute la longueur de celui-ci et au niveau de chaque machine-outil montée sur le bâti, se trouve un pignon engrènant avec la crémaillère, un dispositif d'embrayage étant associé au pignon. Les moyens entraînant la crémaillère permettent ainsi l'entraînement de toutes les machines-outils de la rangée concernée. Lorsque la crémaillère se déplace dans un sens, les embrayages des pignons des machines-outils devant se déplacer dans le même sens sont en position embrayée, tandis que les autres sont en position débrayée. Il suffit de déplacer la crémaillère dans les deux sens selon une course prédéterminée pour positionner toutes les machines-outils de la rangée correspondante.

Dans le cas d'un ensemble de machines-outils dont une partie des machines sont montées sur un bâti, il peut être envisagé qu'un arbre cannelé s'étende sur sensiblement toute la longueur du bâti et qu'une poulie entraînée de façon débrayable par l'arbre cannelé est associée à chaque machine-outil. De même qu'expliqué au paragraphe précédent, l'arbre cannelé peut entraîner toutes les machines-outils en déplacement dans la direction concernée.

Pour connaître précisément la position des diverses machines-outils, l'ensemble selon l'invention comporte avantageusement au moins un codeur par machine-outil déplaçable, afin de connaître la position exacte de celle-ci.

Les moyens permettant l'amenée et le convoyage d'une tôle comportent par exemple des paires de rouleaux disposées perpendiculairement au sens de convoyage de la tôle entre des machines-outils de l'ensemble, des moyens moteurs étant prévus pour entraîner ces rouleaux.

Dans une variante de réalisation, les moyens permettant l'amenée et le convoyage d'une tôle comportent une paire de rouleaux disposées perpendiculairement au sens de convoyage de la tôle en aval de l'ensemble de machines-outils, des moyens moteurs étant prévus pour entraîner ces rouleaux.

Selon une autre forme de réalisation, les moyens permettant l'amenée et le convoyage d'une tôle comportent deux pinces montées coulissantes sur un rail.

De toute façon, l'invention sera bien comprise à l'aide de la description qui suit, en référence au dessin schématique annexé, représentant à titre d'exemple non limitatif une forme de réalisation d'un ensemble de machines-outils selon l'invention.
Figure 1 est une vue de côté d'une rangée de poinçonneuses d'un ensemble selon l'invention,
Figure 2 est une vue en coupe de la figure 1,
Figure 3 est une autre vue en coupe de la figure 1,
Figure 4 est une vue de côté de la figure 1 montrant une rangée de poinçonneuse d'un ensemble selon l'invention,
Figure 5 est une vue partiellement en coupe longitudinale d'une poinçonneuse et des moyens permettant son déplacement,
Figure 6 une vue en plan d'un ensemble selon l'invention,
Figure 7 est une vue de côté d'un ensemble de machines selon l'invention montrant un dispositif d'entraînement de la tôle,
Figure 8 est une vue de dessus de l'ensemble de la figure 7,
Figure 9 correspond à la figure 7 pour une variante de réalisation du dispositif d'amenée de la tôle,
Figure 10 est une vue de dessus de l'ensemble de la figure 9,
Figure 11 est une vue de côté d'un ensemble de machines-outils selon l'invention avec une autre variante du dispositif d'amenée de la tôle, et
Figure 12 montre en vue de dessus le dispositif de la figure précédente.

La présente invention est décrite ci-après en référence à un banc de poinçonnage comportant plusieurs poinçonneuses 2. Les poinçonneuses représentées au dessin ont une forme appelée "en col de cygne". Bien entendu, d'autres types de poinçonneuses et d'autres outils pourrait être utilisés sans pour autant sortir du cadre de l'invention.

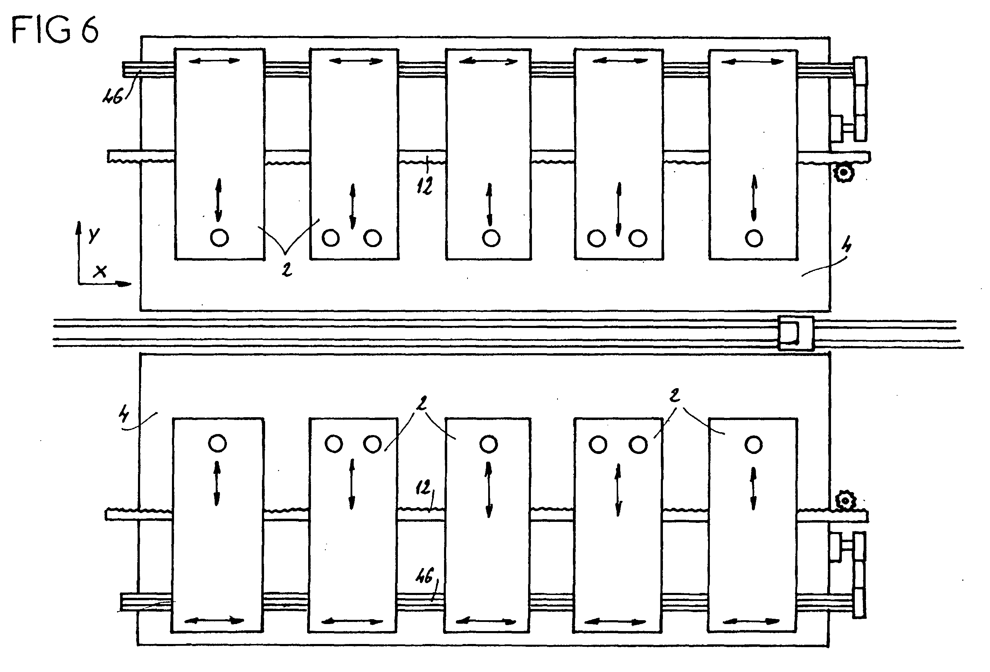

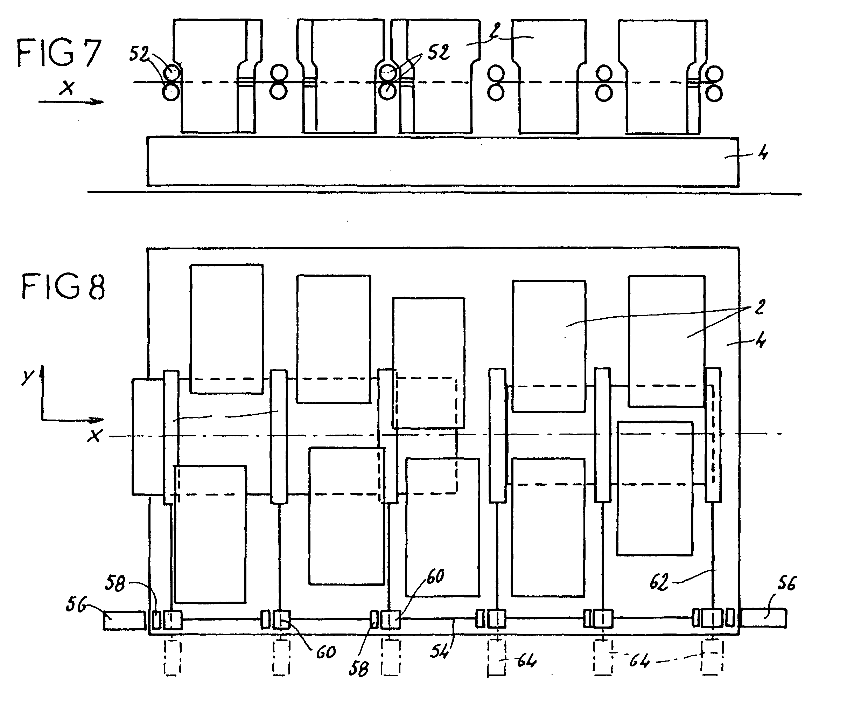

La figure 6 montre l'ensemble du banc de poinçonnage en vue de dessus. Ce banc comporte deux rangées de chacune cinq poinçonneuses 2. Une tôle, non représentée, destinée à être usinée par ces poinçonneuses 2 est apportée par un convoyeur (cf figures 7 à 12) selon une direction représentée au dessin par une flèche référencée par la lettre X. D'après le mode de réalisation de l'invention représenté au dessin, chaque poinçonneuse 2 du banc peut se déplacer dans un plan horizontal selon une première direction Y représentée par une flèche au dessin et perpendiculaire à la direction X, ainsi que dans la direction X.

Les poinçonneuses n'étant pas spécialement l'objet de l'invention ne seront pas décrites en détails ici. Il peut par exemple s'agir de poinçonneuses telles que celles décrites dans la demande de brevet FR-2 750 627. La description qui suit porte essentiellement sur les moyens permettant le déplacement de chacune de ces poinçonneuses selon d'une part la direction X et d'autre part la direction Y, et aussi sur les moyens permettant le déplacement de la tôle usiné.

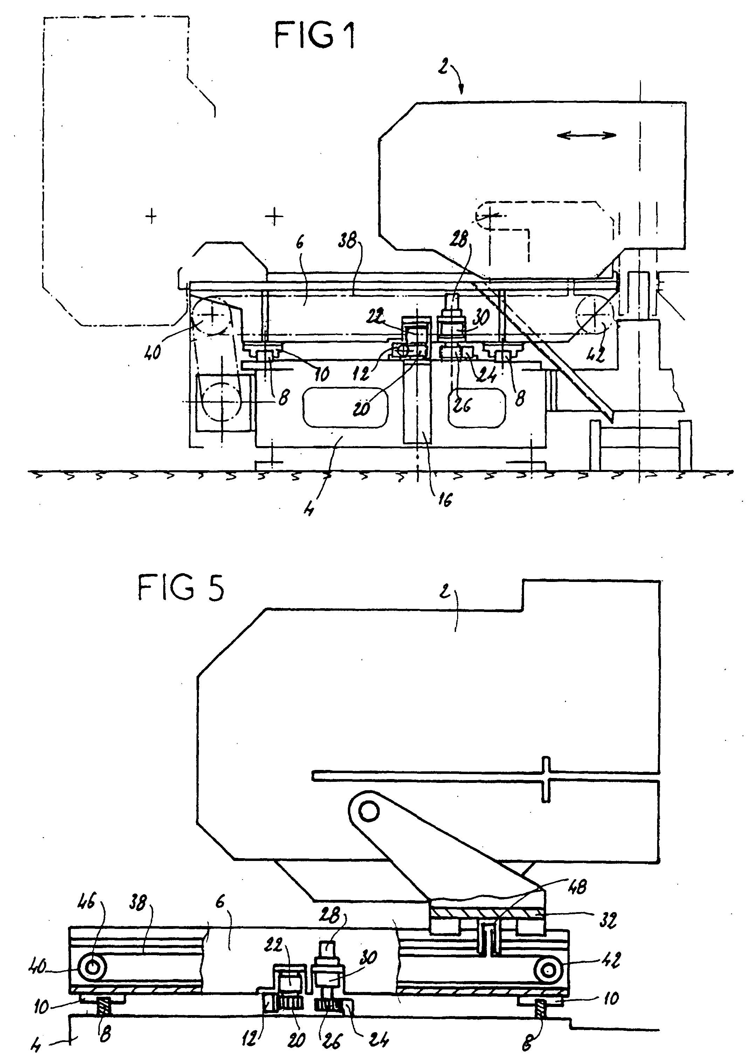

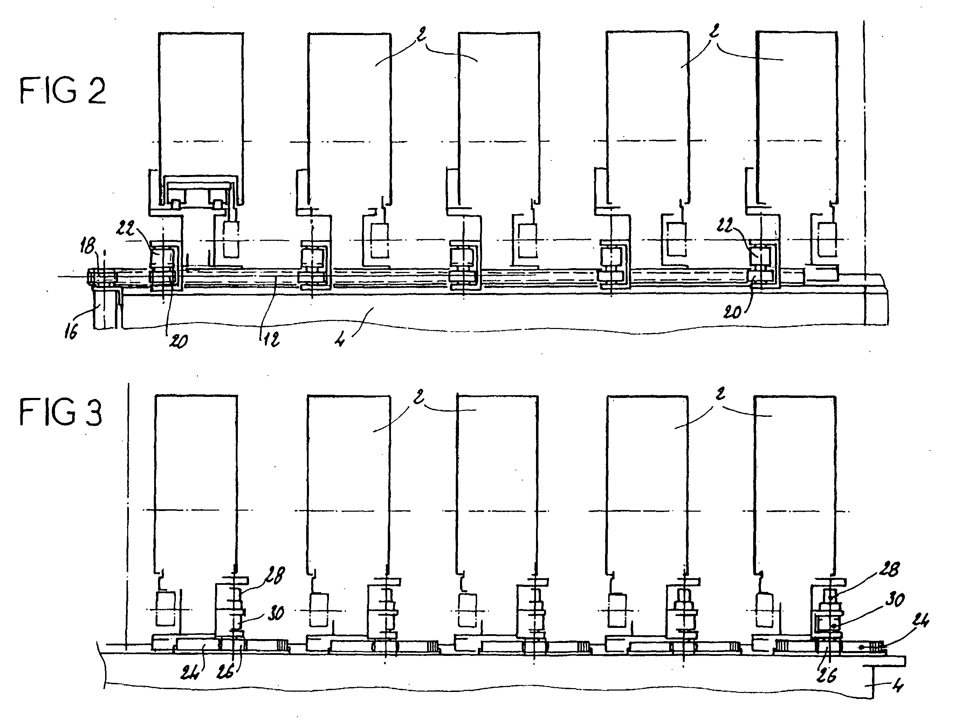

Les figures 1 et 2 montrent les moyens permettant un déplacement selon la direction X, c'est à dire dans la direction du convoyage de la tôle usinée.

Comme indiqué déjà ci-dessus, les poinçonneuses 2 sont alignées sur deux rangées. A chacune de ces rangées correspond un bâti 4 sur lequel sont montées toutes fes poinçonneuses de la rangée.

Chaque poinçonneuse 2 est placée sur un chariot 6 pouvant se déplacer dans la direction X. Ce chariot 6 est monté sur des rails de guidage 8 et comporte des patins de guidage 10. Pour éviter les frottements, les patins de guidage 10 peuvent comporter de façon connue des billes ou des aiguilles qui viennent au contact du rail de guidage correspondant. Les rails de guidage 8 s'étendent dans la direction de déplacement du chariot 6 et sont fixés sur le bâti.

Entre les rails de guidage, 8 et parallèlement à ceux-ci, est montée une crémaillère 12. Cette dernière est mobile longitudinalement, c'est à dire qu'elle peut se translater dans la direction X. Elle est guidée à cet effet par des patins de guidage. Un moteur électrique 16 comportant un arbre de sortie à l'extrémité libre duquel est montée une roue dentée 18 permet l'entraînement en translation de la crémaillère 12. Le moteur 16 est monté par l'intermédiaire d'une bride sur le bâti 4 et il s'étend verticalement alors que la crémaillère 12 s'étend dans un plan horizontal.

Sur chaque chariot 6 sont montés coaxialement un pignon 20 engrènant avec la crémaillère 12 et un embrayage 22. En position accouplée de l'embrayage 22, lorsque la crémaillère 12 se déplace, le pignon 20 reste fixe et la crémaillère 12 entraîne le déplacement du chariot 6, tandis qu'en position débrayée, le pignon 20 est entraîné en rotation, mais le chariot 6 n'est pas entraîné en translation et reste fixe.

La crémaillère 12 peut ainsi servir aux déplacements dans la direction X de toutes les poinçonneuses 2 de la rangée correspondante et il est aussi possible, grâce aux embrayages 22 de déplacer une poinçonneuse indépendamment des autres poinçonneuses.

Afin de connaître précisément la position du chariot 6 par rapport à l'axe des X, un système de détection de position est prévu et est représenté sur la figure 3.

Parallèlement à la crémaillère 12, pour chaque chariot 6, une "petite" crémaillère 24 est fixée, par exemple à l'aide de vis et d'une goupille, sur le bâti 4. Un pignon codeur 26 associé à un codeur 28 est monté sur chaque chariot 6 et engrène avec la crémaillère 24 fixe correspondante. Avantageusement, un frein 30 est prévu coaxialement entre le pignon codeur 26 et le codeur 28.

Ce codeur 28 est relié à un dispositif électronique (non représenté au dessin) destiné à commander le banc de poinçonnage et permet ainsi de connaître avec précision, à tout moment, la position du chariot 6.

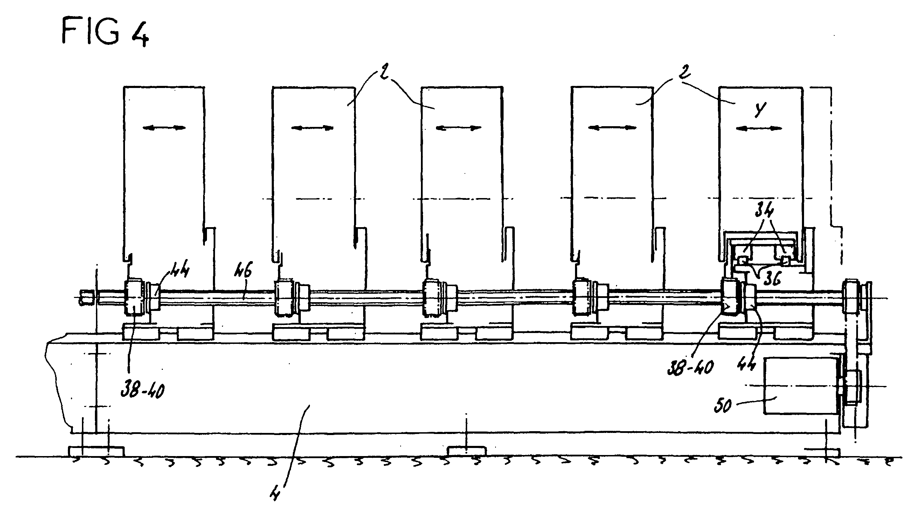

Les moyens permettant le déplacement de la poinçonneuse dans la direction Y sont visibles notamment sur les figures 4 et 5.

La poinçonneuse 2 est montée sur un chariot 32, lui même monté mobile en translation selon la direction Y sur le chariot 6. Le chariot 32 est muni de patins de guidage 34 coopérant avec des rails de guidage 36 montés sur le chariot 6 parallèlement à la direction Y.

Le déplacement du chariot 32 s'effectue à l'aide d'une courroie 38 crantée. Cette courroie est montée sur deux poulies, une première poulie 40 entraîne la courroie 38 tandis que la seconde poulie 42 est menée. La poulie menante 40 est montée par l'intermédiaire d'un embrayage 44 sur un arbre cannelé 46.

La courroie 38 est une courroie linéaire dont les deux extrémités sont fixées à un profilé 48 solidaire du chariot 32 et passant bien entendu sur les poulies menante 40 et menée 42. L'arbre cannelé 46 est entraîné en rotation par un moteur 50 électrique.

En position embrayée de l'embrayage, l'arbre cannelé 46 entraîne la poulie menante 40 et provoque le déplacement du chariot 32, tandis qu'en position débrayée, la poulie 40 n'est pas entraînée et le chariot 32 ne bouge pas.

Afin de connaître la position exacte du chariot 32 par rapport au chariot 6, et ainsi connaître précisément la position en direction Y de la poinçonneuse 2 correspondante, un codeur (non représenté) est monté sur l'axe de la poulie menée.

Un seul arbre cannelé 46 est prévu pour toutes les poinçonneuses 2 d'une même rangée. Le fait que l'arbre soit cannelé, permet à la poulie menante 40 et à l'embrayage de coulisser par rapport à l'arbre 46 lorsque le chariot 6 correspondant se déplace par rapport à la direction X. Grâce aux embrayages 44, il est possible de déplacer un chariot 32, et donc la poinçonneuse 2 correspondante, indépendamment des autres chariots 32.

Le gain de temps avec un banc de poinçonnage selon l'invention par rapport aux bancs de poinçonnage de l'art antérieur est très sensible. Ainsi, pendant qu'une tôle à poinçonner est apportée face aux poinçonneuses 2, par exemple à l'aide d'un convoyeur, les poinçonneuses sont positionnées de manière à pouvoir poinçonner la tôle dès que celle-ci est en place. Le moteur 16 entraîne la crémaillère 12 dans un sens puis dans l'autre selon une course correspondant au déplacement maximal d'un chariot 6. Pendant ce déplacement de la crémaillère 12, chaque embrayage 22 correspondant à un chariot 6 reste en position embrayée le temps nécessaire à son déplacement pour arriver dans la position souhaitée.

En même temps, le moteur 50 entraîne l'arbre cannelé 46 dans les deux sens de rotation, de manière à permettre le déplacement des chariots 32 selon la direction Y.

Les embrayages 22 et 44 sont commandés par l'électronique de commande gérant le banc de poinçonnage.

Tous ces réglages sont réalisés en temps masqué. Dans la plupart des cas de figure, la tôle ne sera pas bougée pendant son usinage. Les poinçonneuses 2 travaillent toutes sensiblement simultanément, tandis qu'avec un banc de poinçonnage de l'art antérieur, il fallait généralement placer différemment la tôle au cours du processus de poinçonnage pour pouvoir réaliser tous les trous prévus. Les poinçonneuses travaillent alors, avec un banc de l'art antérieur, une après l'autre ou aussi parfois deux par deux.

La figure 7 montre en vue de côté l'ensemble de machines des figures 1 à 6 ainsi qu'un dispositif d'amenée de tôles et de convoyage de celles-ci durant l'usinage. Ce dispositif comporte une paire de rouleaux 52 placés chaque fois entre un ensemble de deux machines se faisant face ainsi qu'aux extrémités amont et aval de l'ensemble de machines-outils. Chaque rouleau 52 s'étend dans le sens de la largeur de la tôle à convoyer dans la direction Y, c'est à dire la direction perpendiculaire à la direction de déplacement de la tôle dans le plan de celle-ci. Sur le dessin, les rouleaux 52 ont une longueur supérieure à la largeur de la tôle à usiner. Toutefois, il est envisageable d'avoir des rouleaux de largeur sensiblement moindre. Les rouleaux sont identiques paire par paire et dans chaque paire, ils sont reliés entre eux par des engrenages non représentés de telle sorte que l'entraînement d'un rouleau dans un sens de rotation implique la rotation de l'autre rouleau à la même vitesse dans le sens contraire.

La figure 8 montre les moyens permettant d'entraîner les rouleaux 52. Deux options sont représentées. En trait fort, on a représenté un arbre 54 aux extrémités duquel est chaque fois monté un moteur 56. À la hauteur de chaque paire de rouleaux 52 est monté un embrayage 58 associé à un renvoi d'angle 60. Un arbre secondaire 62 relie chaque renvoi d'angle 60 à un rouleau 52 correspondant.

De cette manière, il est possible d'entraîner un rouleau de chaque paire de rouleaux indépendamment des autres paires de rouleaux. Ceci permet de convoyer deux ou plusieurs tôles. Bien entendu, tous les moteurs 56 et embrayages 58 sont relié et commandés par l'électronique de commande de l'ensemble des machines-outils.

En traits mixtes est représentée une variante de réalisation. Ici, chaque paire de rouleaux est associée à un moteur 64. L'arbre principal 54 est alors inutile et seuls les arbres secondaires 62 sont conservés. Ces moteurs 64 sont chacun reliés à l'électronique de commande. Il est ici également possible de convoyer plusieurs tôles simultanément.

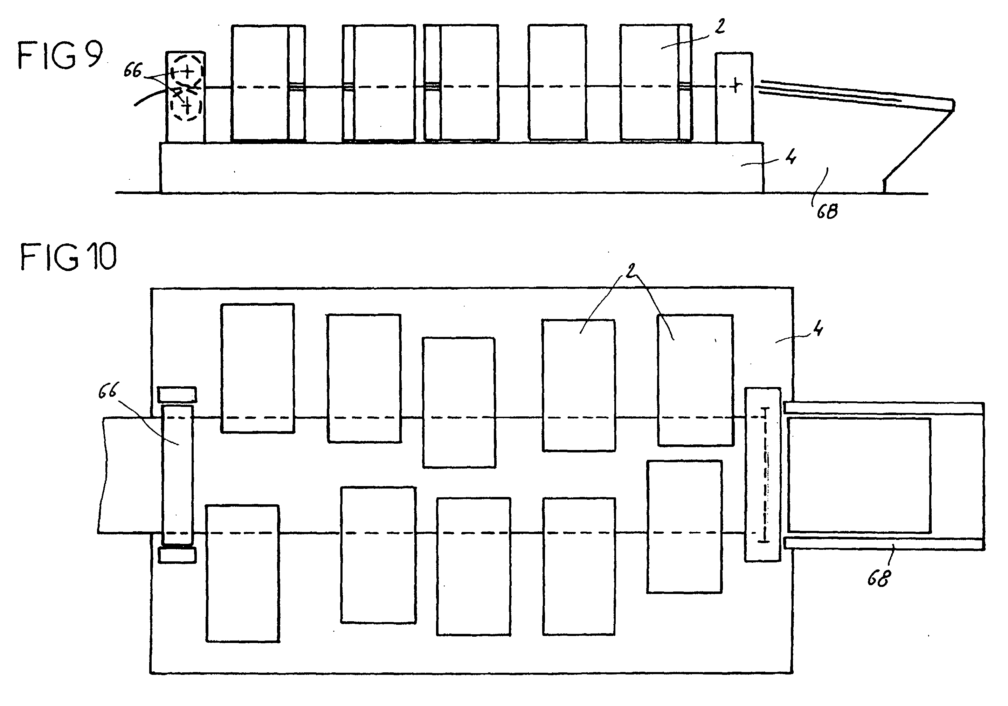

Lorsque seules des tôles de grande longueur sont usinées, seule la présence d'une paire de rouleaux d'entraînement est nécessaire comme montré sur les figures 9 et 10.

On a alors une paire de rouleaux 66 placée en amont de l'ensemble des machines outils. Ces rouleaux 66 sont entraînés par un moteur non représenté. La tôle est guidée sur toute la longueur de l'ensemble de machines-outils ainsi qu'en aval de cet ensemble. Elle vient ensuite sur un convoyeur 68 qui assure la traction de la tôle hors de l'ensemble de machines-outils une fois l'usinage réalisé.

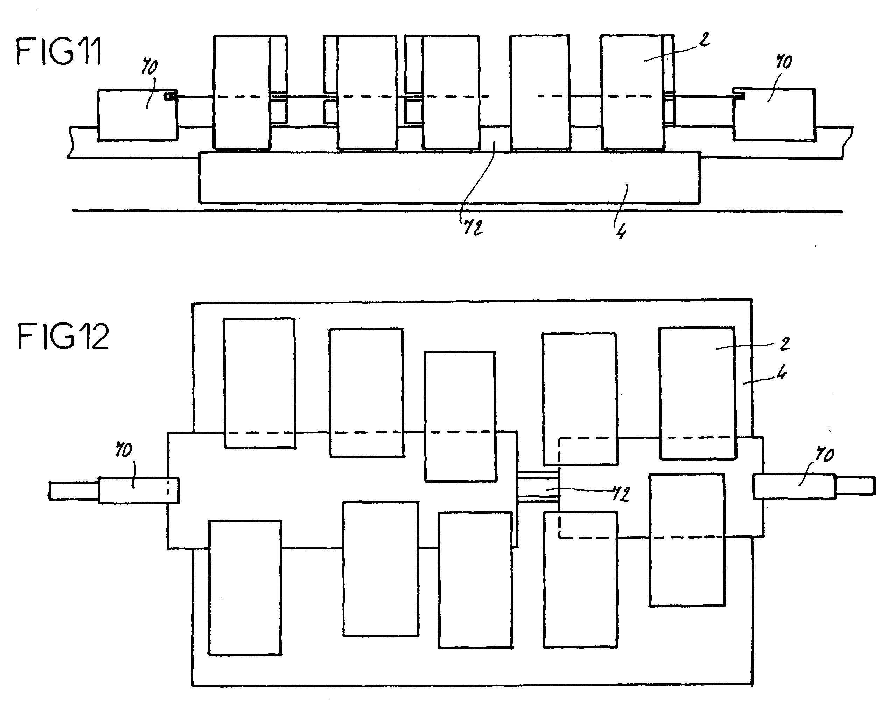

Sur les figures 11 et 12, le dispositif d'amenée et de convoyage de la tôle ne comporte plus de rouleaux mais deux pinces 70 montées coulissantes sur un rail 72 s'étendant dans la direction du déplacement de la tôle. Une pince 70 est placé plutôt en amont de l'ensemble de machines-outils selon l'invention afin d'introduire une tôle dans cet ensemble et une la seconde pince se trouve plutôt en aval de cet ensemble pour extraire une tôle introduite dans cet ensemble.

Les deux pinces 70 peuvent aussi se déplacer en hauteur, c'est à dire perpendiculairement au plan de la tôle usinée, pour permettre le passage d'une tôle au dessus de la pince.

Comme il va de soi, l'invention ne se limite pas au mode de réalisation décrit ci-dessus à titre d'exemple non limitatif ; elle en embrasse au contraire toutes les variantes dans le cadre des revendications ci-après.

Ainsi par exemple, les déplacements dans les deux directions pourraient être effectués à l'aide d'un système à crémaillère, ou bien à l'aide d'une courroie. Il est aussi envisageable d'utiliser d'autres moyens pour déplacer dans les deux directions les outils : par exemple des vérins pneumatiques ou hydrauliques, ou des moteurs linéaires.

Dans l'exemple de réalisation, chaque poinçonneuse est montée mobile par rapport aux autres poinçonneuses. Il est possible de monter deux ou plusieurs outils sur un même chariot. Ainsi, ces deux ou plusieurs outils se déplaceront toujours de la même manière dans une ou deux directions. Deux outils peuvent être solidaires en ce qui concerne le déplacement selon une direction, mais être mobiles indépendamment en ce qui concerne la seconde position.

Il est aussi envisageable, pour diminuer les coûts de revient du banc d'usinage selon l'invention, de laisser fixe un ou plusieurs outils et de positionner la tôle à usiner en fonction de ces outils fixes. Il est bien sûr également possible d'avoir quelques outils déplaçables selon un direction mais pas selon une seconde.

## Revendications

1. Ensemble de machines-outils comportant au moins deux machines-outils (2) pour l'usinage de la tôle, l'une au moins de ces machines-outils étant munie de moyens la rendant déplaçable selon une première direction (Y) généralement perpendiculaire à la direction de convoyage des tôles à usiner, ainsi que des moyens (52 ; 66 ; 70) permettant l'amenée et le convoyage d'une tôle,
**caractérisé en ce que** l'une au moins des machines-outils (2) déplaçables selon la première direction (Y) est disposée sur un chariot (6) ou similaire, et **en ce que** des moyens sont prévus pour déplacer chaque chariot (6) selon une seconde direction (X) généralement parallèle à la direction de convoyage des tôles à usiner.

2. Ensemble selon la revendication 1, **caractérisé en ce que** les première (Y) et seconde (X) directions sont perpendiculaires.

3. Ensemble selon l'une des revendications 1 ou 2, **caractérisé en ce que** les moyens permettant le déplacement d'une machine-outil (2) selon une direction comportent une crémaillère (12) parallèle à cette direction et déplaçable longitudinalement à l'aide d'un moteur (16) ainsi qu'un pignon (20) muni d'un dispositif d'embrayage (22), le pignon (20) étant destiné à venir engrener avec la crémaillère (12).

4. Ensemble selon l'une des revendications 1 à 3, **caractérisé en ce que** les moyens permettant le déplacement d'une machine-outil (2) selon une direction comportent un arbre (46) perpendiculaire à cette direction, entraîné en rotation par un moteur (50) ainsi qu'une poulie (40) montée de façon débrayable sur l'arbre, la poulie (40) étant associée à une seconde poulie (42) par l'intermédiaire d'une courroie (38) sur laquelle est monté un chariot (32) portant la machine-outil (2) correspondante.

5. Ensemble selon l'une des revendications 1 à 4,**caractérisé en ce qu'**il comporte deux rangées parallèles de machines-outils se faisant face.

6. Ensemble selon la revendication 5, **caractérisé en ce que** chaque rangée de machines-outils est montée sur un bâti (4).

7. Ensemble selon la revendication 6, **caractérisé en ce qu'**une crémaillère (12) mobile longitudinalement est montée sur le bâti (4) sur sensiblement toute la longueur de celui-ci et **en ce qu'**au niveau de chaque machine-outil (2) montée sur le bâti, se trouve un pignon (20) engrènant avec la crémaillère (12), un dispositif d'embrayage (22) étant associé au pignon (20).

8. Ensemble selon la revendication 6, **caractérisé en ce qu'**un arbre cannelé (46) s'étend sur sensiblement toute la longueur du bâti (4) et **en ce qu'**une poulie (40) entraînée de façon débrayable par l'arbre cannelé est associée à chaque machine-outil (2).

9. Ensemble selon l'une des revendications 1 à 8, **caractérisé en ce qu'**il comporte au moins un codeur (28) par machine-outil (2) déplaçable, afin de connaître la position exacte de celle-ci.

10. Ensemble selon l'une des revendications 1 à 9, **caractérisé en ce que** les moyens permettant l'amenée et le convoyage d'une tôle comportent des paires de rouleaux (52) disposées perpendiculairement au sens de convoyage de la tôle entre des machines-outils de l'ensemble, des moyens moteurs (56,64) étant prévus pour entraîner ces rouleaux.

11. Ensemble selon l'une des revendications 1 à 9, **caractérisé en ce que** les moyens permettant l'amenée et le convoyage d'une tôle comportent une paire de rouleaux (66) disposées perpendiculairement au sens de convoyage de la tôle en aval de l'ensemble de machines-outils, des moyens moteurs étant prévus pour entraîner ces rouleaux.

12. Ensemble selon l'une des revendications 1 à 9, **caractérisé en ce que** les moyens permettant l'amenée et le convoyage d'une tôle comportent deux pinces (70) montées coulissantes sur un rail (72).

## Patentansprüche

1. Anordnung von Werkzeugmaschinen, die zumindest zwei Werkzeugmaschinen (2) für die Bearbeitung des Blechs umfasst, wobei zumindest eine der Werkzeugmaschinen mit Mitteln ausgestattet ist, die es ermöglichen, sie längs einer ersten Richtung (Y), welche allgemein orthogonal zur Richtung, in der die zu bearbeitenden Bleche transportiert werden, verläuft, zu verschieben, sowie auch Mittel (52; 66; 70), die die Zuführung und den Transport eines Blechs erlauben,
**dadurch gekennzeichnet, dass** zumindest eine der in die erste Richtung (Y). verschiebbaren Werkzeugmaschinen (2) auf einem Karren (6) oder dergleichen angeordnet ist, und dass Mittel vorgesehen sind, um jeden Karren (6) in eine allgemein parallel zur Transportrichtung der zu bearbeitenden Bleche verlaufenden Richtung (X) zu verschieben.

2. Anordnung nach Anspruch 1, **dadurch gekennzeichnet, dass** die erste Richtung (Y) und die zweite Richtung (X) orthogonal zueinander verlaufen.

3. Anordnung nach einem der Ansprüche 1 oder 2, **dadurch gekennzeichnet, dass** die Mittel, die das Verschieben einer Werkzeugmaschine (2) in eine Richtung ermöglichen, eine Zahnstange (12) umfassen, die parallel zu dieser Richtung verläuft und die mittels eines Motors (16) in Längsrichtung verschiebbar ist, sowie auch ein Ritzel (20), das ausgestattet ist mit einer Vorrichtung zum ausrückbaren Kuppeln (22), wobei das Ritzel (20) dafür bestimmt ist, mit der Zahnstange (12) in Eingriff zu gelangen.

4. Anordnung nach einem der Ansprüche 1 - 3, **dadurch gekennzeichnet, dass** die Mittel, die das Verschieben einer Werkzeugmaschine (2) in eine Richtung ermöglichen, eine zu dieser Richtung orthogonal verlaufende Welle (46) umfassen, die durch einen Motor (50) drehangetrieben ist, sowie auch eine ausrückbar an der Welle festgemachte Riemenscheibe (40), wobei die Riemenscheibe (40) mittels eines Riemens (38) mit einer zweiten Riemenscheibe (42) verbunden ist, wobei auf dem Riemen (38) ein Karren (32) angebracht ist, der die entsprechende Werkzeugmaschine (2) trägt.

5. Anordnung nach einem der Ansprüche 1 - 4, **dadurch gekennzeichnet, dass** sie zwei sich gegenüberstehende, parallele Reihen von Werkzeugmaschinen umfasst.

6. Anordnung nach Anspruch 5, **dadurch gekennzeichnet, dass** jede Reihe von Werkzeugmaschinen auf einem Rahmen (4) angebracht ist.

7. Anordnung nach Anspruch 6, **dadurch gekennzeichnet, dass** eine in Längsrichtung bewegliche Zahnstange (12) auf der im Wesentlichen ganzen Länge des Rahmens (4) angebracht ist, und dass sich im Bereich jeder der auf dem Rahmen angebrachten Werkzeugmaschinen (2) ein Ritzel (20) befindet, das mit der Zahnstange (12) ineinandergreift, wobei eine Vorrichtung zum ausrückbaren Kuppeln (22) mit dem Ritzel (20) verbunden ist.

8. Anordnung nach Anspruch 6, **dadurch gekennzeichnet, dass** eine Nutenwelle (46) sich im Wesentlichen auf der ganzen Länge des Rahmens (4) erstreckt und dass eine Riemenscheibe (40), die auf ausrückbare Weise von der Nutenwelle angetrieben wird, mit jeder Werkzeugmaschine (2) verbunden ist.

9. Anordnung nach einem der Ansprüche 1 - 8, **dadurch gekennzeichnet, dass** sie zumindest ein Kodiergerät (28) pro verschiebbarer Werkzeugmaschine (2) umfasst, um dessen exakte Position zu erkennen.

10. Anordnung nach einem der Ansprüche 1 - 9, **dadurch gekennzeichnet, dass** die Mittel, die die Zuführung und den Transport eines Blechs erlauben, Walzenpaare (52) umfassen, die senkrecht zur Transportrichtung des Blechs zwischen den Werkzeugmaschinen des Satzes angeordnet sind, wobei motorische Mittel (56; 64) vorgesehen sind, um die Walzen anzutreiben.

11. Anordnung nach einem der Ansprüche 1 - 9, **dadurch gekennzeichnet, dass** die Mittel, die die Zuführung und den Transport eines Blechs erlauben, ein Paar von Walzen (66) umfassen, die senkrecht zur Transportrichtung des Blechs unterhalb des Satzes von Werkzeugmaschinen angeordnet sind, wobei motorische Mittel vorgesehen sind, um die Walzen anzutreiben.

12. Anordnung nach einem der Ansprüche 1 - 9, **dadurch gekennzeichnet, dass** die Mittel, die die Zuführung und den Transport eines Blechs ermöglichen, zwei Greifer (70) umfassen, die auf verschiebbare Weise auf einer Schiene (72) angebracht sind.

## Claims

1. Series of machine tools comprising at least two machine tools (2) for machining of metal plate, at least one of these machine tools being provided with means which enable it to be displaced in a first direction (Y), which is generally perpendicular to the direction of conveying of the metal plates to be machined, as well as means (52; 66; 70) which permit feeding and conveying of a metal plate;
**characterised in that** at least one of the machine tools (2), which can be displaced in the first direction (Y) is disposed on a carriage (6) or the like, and **in that** means are provided for displacing each carriage (6) in a second direction (X), which is generally parallel to the direction of conveying of the metal plates to be machined.

2. Series according to claim 1, **characterised in that** the first (Y) and second (X) directions are perpendicular.

3. Series according to claim 1 or claim 2, **characterised in that** the means which permit displacement of a machine tool (2) in one direction comprise a rack (12), which is parallel to this direction, and can be displaced longitudinally by means of a motor (16), as well as a pinion (20) which is provided with a clutch device (22), the pinion (20) being designed to be engaged with the rack (12).

4. Series according to any one of claims 1 to 3, **characterised in that** the means which permit displacement of a machine tool (2) in one direction comprise a shaft (46) which is perpendicular to this direction, and is rotated by a motor (50), as well as a pulley (40), which is fitted to the shaft in such a manner that it can be disengaged, the pulley (40) being associated with a second pulley (42) by means of a belt (38) on which there is fitted a carriage (32) which supports the corresponding machine tool (2).

5. Series according to any one of claims 1 to 4, **characterised in that** it comprises two parallel rows of machine tools which are opposite one another.

6. Series according to claim 5, **characterised in that** each row of machine tools is fitted on a frame (4).

7. Series according to claim 6, **characterised in that** a rack (12), which is mobile longitudinally, is fitted on the frame (4) on substantially all of the length of the latter, and **in that** at the level of each machine tool (2) which is fitted on the frame, there is a pinion (20) which engages with the rack (12), a clutch device (22) being associated with the pinion (20).

8. Series according to claim 6, **characterised in that** a grooved shaft (46) extends on substantially all the length of the frame (4), and **in that** a pulley (40), which is driven by the grooved shaft in such a manner that it can be disengaged, is associated with each machine tool (2).

9. Series according to any one of claims 1 to 8, **characterised in that** it comprises at least one displaceable encoder (28) per machine tool (2), in order to determine the exact position of the latter.

10. Series according to any one of claims 1 to 9, **characterised in that** the means which permit feeding and conveying of a metal plate comprise pairs of rollers (52), which are disposed perpendicularly to the direction of conveying of the metal plate, between machine tools in the series, drive means (56, 64) being provided in order to drive these rollers.

11. Series according to any one of claims 1 to 9, **characterised in that** the means which permit feeding and conveying of a metal plate comprise a pair of rollers (66), which are disposed perpendicularly to the direction of conveying of the metal plate, downstream from the series of machine tools, drive means being provided in order to drive these rollers.

12. Series according to any one of claims 1 to 9, **characterised in that** the means which permit feeding and conveying of a metal plate comprise two grippers (70), which are fitted such as to slide on a rail (72).
